# DEMANDE DE BREVET EUROPEEN

(11) **EP 1 201 683 A1**
(43) Date de publication de la demande: **02.05.2002**
(21) Numéro de dépôt: 00203793.5
(22) Date de dépôt: 30.10.2000
(51) Int. Cl.: C08F 10/00, C08F 4/70, C08F 4/646

(54) **Procédé pour la polymérisation des alpha-oléfines**

(71) Demandeur: SOLVAY POLYOLEFINS EUROPE - BELGIUM (Société Anonyme), 1050 Bruxelles (BE)
(72) Inventeur: Radhakrishnan, Karunakaran, 33600 Pessac (FR); Cramail, Henri, 33350 Sainte Terre (FR); Deffieux, Alain, 33000 Bordeaux (FR); Francois, Philippe, 1490 Court-Saint-Etienne (BE)
(74) Mandataire: Destryker, Elise Martine

(57) **Abrégé**

Procédé de polymérisation d'alpha-oléfines dans lequel on met en contact, dans des conditions polymérisantes, au moins une alpha-oléfine avec un système catalytique comprenant
(a) au moins un complexe catalytique à base d'un métal de transition des groupes 4 à 12,
(b) au moins un trialkylaluminium, et
(c) au moins une boroxine représentée par la formule (I) 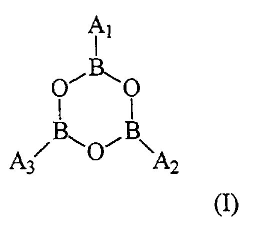
dans laquelle A¹ à A³ représentent chacun, de manière indépendante, un groupe alkyle, cycloalkyle, alkoxy ou aryle, éventuellement substitué et dans lequel le rapport atomique du bore provenant de la boroxine (c) à l'aluminium provenant du trialkylaluminium (b) est inférieur à 0,9.

## Description

La présente invention concerne un procédé pour la polymérisation des alpha-oléfines.

Il est connu de polymériser les alpha-oléfines au moyen de catalyseurs dits mono-sites (« single site ») tels que les catalyseurs métallocènes ou les catalyseurs comprenant des complexes à base d'un métal de transition des groupes 6 à 12 du Tableau Périodique. La demande de brevet WO 96/23010 décrit l'utilisation des complexes à base d'un métal de transition des groupes 6 à 12 du Tableau Périodique avec des cocatalyseurs choisis parmi les aluminoxanes. La demande de brevet US 5,457,171 décrit un système catalytique comprenant un complexe métallocène, un aluminoxane et une boroxine permettant d'obtenir une bonne productivité. La demande de brevet EP 0 348 126 décrit la polymérisation de l'éthylène à l'aide d'un système catalytique comprenant un complexe métallocène et un composé du type aluminoxane obtenu en faisant réagir, dans des quantités stoechiométriques une boroxine et un trialkylaluminium. Généralement, les aluminoxanes se présentent sous forme d'oligomères collants et sont difficiles à manipuler et à synthétiser. En outre, les aluminoxanes commercialement disponibles ont une pureté très variable et sont relativement coûteux.

On a maintenant trouvé un procédé de polymérisation des alpha-oléfines au moyen d'un système catalytique à base d'un catalyseur mono-site ayant une bonne activité qui ne nécessite pas l'utilisation d'aluminoxanes et qui ne présente pas les inconvénients précités.

A cet effet, la présente invention concerne un procédé de polymérisation d'alpha-oléfines dans lequel on met en contact, dans des conditions polymérisantes, au moins une alpha-oléfine avec un système catalytique comprenant
(a) au moins un complexe catalytique à base d'un métal de transition des groupes 4 à 12,
(b) au moins un trialkylaluminium, et
(c) au moins une boroxine représentée par la formule (I) 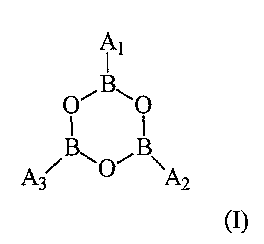
dans laquelle A¹ à A³ représentent chacun, de manière indépendante, un groupe alkyle, cycloalkyle, alkoxy ou aryle, éventuellement substitué, et dans lequel le rapport atomique du bore provenant de la boroxine (c) à l'aluminium provenant du trialkylaluminium (b) est inférieur à 0,9.

Dans la présente invention, on entend désigner par alpha-oléfines, les oléfines à insaturation terminale contenant de 2 à 20, de préférence de 2 à 8 atomes de carbone, telles que, notamment, l'éthylène, le propylène, le 1-butène, le 1-méthyl-pentène, le 1-hexène, le 1-octène. Il va de soi que, outre l'oléfine, un autre monomère copolymérisable avec l'oléfine peut être mis en oeuvre dans le procédé selon l'invention.

Selon une première forme d'exécution du procédé selon l'invention, le complexe catalytique (a) est choisi parmi les métallocènes comprenant au moins un métal de transition des groupes 4 ou 5 du Tableau Périodique.

Dans cette première forme d'exécution, les métallocènes sont le plus souvent choisis parmi les complexes de formules

Qₐ (C₅H_{5-a-b}R¹ _{b})(C₅H_{5-a-c}R² _{c}) M¹ X¹ Y (II)

et

Q'ₐ (C₅H_{5-a-d}R³ _{d}) Z M¹ X¹ Y (III)

dans lesquelles
- Q représente un groupe de liaison bivalent entre les deux ligands cyclopentadiéniques (C₅H_{5-a-b}R¹_{b}) et ( C₅H_{5-a-c}R²_{c}),
- Q' représente un groupe de liaison bivalent entre le ligand cyclopentadiénique (C₅H_{5-a-d}R³_{d}) et le groupe Z,
- a vaut 0 ou 1,
- b, c et d sont des nombres entiers satisfaisant aux conditions 0≤b≤5, 0≤c≤5 et 0≤d≤5 quand a vaut 0 et 0≤b≤4, 0≤c≤4 et 0≤d≤4 quand a vaut 1,
- R¹, R² et R³ représentent chacun des groupes hydrocarbonés contenant de 1 à 20 atomes de carbone pouvant être reliés au cycle cyclopentadiénique sous la forme d'un groupe monovalent ou pouvant être reliés l'un à l'autre de manière à former un cycle adjacent au cycle cyclopentadiénique, des atomes d'halogène, des groupes alkoxy ayant de 1 à 12 atomes de carbone, des groupes hydrocarbonés contenant du silicium de formule -Si(A⁴)(A⁵)(A⁶), des groupes hydrocarbonés phosphorés de formule -P(A⁴)(A⁵), des groupes hydrocarbonés azotés de formule -N(A⁴)(A⁵) ou des groupes hydrocarbonés contenant du bore de formule -B(A⁴)(A⁵) dans lesquelles A⁴, A⁵ et A⁶ représentent des groupes hydrocarbonés contenant de 1 à 24 atomes de carbone, pour autant que quand b, c ou d vaut 2 ou plus et/ou qu'il existe une pluralité de groupes R¹, R² ou R³, ces derniers peuvent être identiques ou différents,
- M¹ représente un métal de transition des groupes 4 ou 5,
- Z représente un atome d'oxygène, un atome de soufre, un groupe alkoxy ou thioalkoxy ayant de 1 à 20 atomes de carbone, un groupe hydrocarboné azoté ou phosphoré ayant de 1 à 40 atomes de carbone ou un groupe hydrocarboné contenant de 1 à 20 atomes de carbone, pour autant qu'une liaison du groupe Z soit liée au groupe Q' quand a vaut 1, et
- X¹ et Y, identiques ou différents, représentent chacun un atome d'hydrogène, un atome d'halogène, un groupe hydrocarboné, un groupe alkoxy, un groupe amino, un groupe hydrocarboné phosphoré ou un groupe hydrocarboné contenant du silicium ayant de 1 à 20 atomes de carbone.

Les métallocènes de formule (II) préférés sont généralement tels que
- Q représente un groupe alkylène contenant 1 ou 2 atomes de carbone pouvant être substitués par des groupes alkyle ou aryle contenant de 1 à 10 atomes de carbone, ou un groupe dialkylgermanium ou dialkylsilicium contenant de 1 à 6 atomes de carbone,
- a vaut 0 ou 1,
- b, c et d sont des nombres entiers satisfaisant aux conditions 0≤b≤5, 0≤c≤5 et 0≤d≤5 quand a vaut 0 et 0≤b≤4, 0≤c≤4 et 0≤d≤4 quand a vaut 1,
- R¹ et R² représentent des groupes alkyle, alkényle, aryle, alkylaryle, alkénylaryle ou arylalkyle contenant de 1 à 20 atomes de carbone, plusieurs groupes R¹ et/ou plusieurs groupes R² pouvant être reliés l'un à l'autre de manière à former un cycle contenant de 4 à 8 atomes de carbones,
- M¹ est le zirconium, l'hafnium ou le titane,
- X¹et Y représentent des atomes d'halogènes ou des groupes hydrocarbonés choisis parmi les alkyles, les aryles et les alkényles contenant de 1 à 10 atomes de carbone.

Particulièrement préférés sont les métallocènes de formule (II) dans lesquels Q est un groupe de liaison choisi parmi le diméthyl- et le diphényl silyl, l'éthylène et les méthylènes et éthylènes substitués par des groupes alkyle ou aryle contenant de 1 à 8 atomes de carbone. Des complexes de formulé (II) qui conviennent particulièrement bien sont les complexes dans lesquels les ligands (C₅H_{5-a-b}R¹_{b}) et ( C₅H_{5-a-c}R²_{c}) sont choisis parmi les cyclopentadiényles, indényles et fluorényles pouvant être substitués.

Les métallocènes de formule (III) préférés sont le plus souvent tels que
- a vaut 1,
- Q' représente un groupe de liaison alkylène contenant 1 ou 2 atomes de carbone pouvant être substitués par des groupes alkyle ou aryle contenant de 1 à 10 atomes de carbone, ou un groupe dialkylgermanium ou dialkylsilicium contenant de 1 à 6 atomes de carbone,
- R³ représente un groupe alkyle, alkényle, aryle, alkylaryle, alkénylaryle ou arylalkyle contenant de 1 à 20 atomes de carbone, deux groupes R³ pouvant être reliés l'un à l'autre de manière à former un cycle contenant de 4 à 8 atomes de carbones,
- M¹ est le zirconium, l'hafnium ou le titane,
- X¹et Y représentent des atomes d'halogènes ou des groupes hydrocarbonés choisis parmi les alkyles, les aryles et les alkényles.

Des métallocènes de formule (III) particulièrement préférés sont les complexes dans lesquels le ligand (C₅H_{5-a-d}R³_{d}) est un cyclopentadiényle, indényle ou fluorényle pouvant être substitué et Z est un groupement amino.

Selon une deuxième forme d'exécution du procédé selon l'invention, qui est préférée, le complexe catalytique (a) est choisi parmi les complexes catalytiques comprenant au moins un métal de transition des groupes 6 à 12 du Tableau Périodique. Dans cette deuxième forme d'exécution, les complexes catalytiques (a) sont en général choisis parmi ceux contenant au moins deux hétéroatomes et plus particulièrement parmi les molécules représentées par la formule (IV) 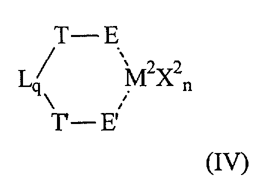 dans laquelle
M² est un métal de transition des groupes 6 à 12,
E et E' sont des groupements donneurs d'électrons contenant un atome du groupe 15; E et E' peuvent être différents ou identiques,
L est un groupement donneur d'électrons contenant un atome du groupe 14 à 16 ou un noyau aromatique hydrocarboné; L peut être différent de ou identique à E et/ou E',
T et T' représentent de façon indépendante, des ponts saturés ou insaturés contenant des éléments des groupes 14 à 16,
X² représente un atome d'halogène,
n est 2 ou 3,
q est 1 ou 0.

Les complexes catalytiques (a) comprenant au moins un métal de transition des groupes 6 à 12 ayant donné de bons résultats sont ceux répondant à la formule générale (V) 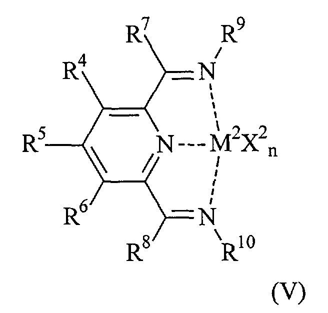 dans laquelle
M² et X² ont la même définition qu'auparavant,
R⁴, R⁵, R⁶, R⁷ et R⁸ représentent chacun, de manière indépendante, un atome d'hydrogène, un groupement hydrocarbyl ou un groupement hydrocarbyl substitué,
R⁹ et R¹⁰ représentent chacun, de manière indépendante, un groupement aryle ou un groupement aryle substitué.

Les complexes catalytiques préférés sont ceux représentés par la formule (V) dans laquelle
R⁹ répond à la formule 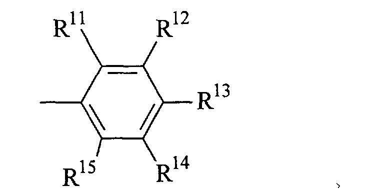
et R¹⁰ répond à la formule 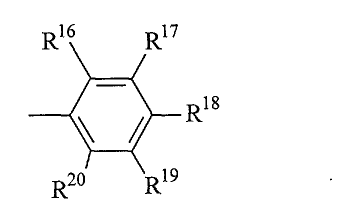 dans lesquelles
R¹¹ et R¹⁶ représentent chacun, de manière indépendante, un groupe hydrocarbyl ou un groupe hydrocarbyl substitué,
R¹², R¹³, R¹⁴, R¹⁵, R¹⁷, R¹⁸, R¹⁹ et R²⁰ représentent chacun, de manière indépendante, un atome d'hydrogène, un groupe hydrocarbyl ou un groupe hydrocarbyl substitué,
   les groupes R¹¹, R¹², R¹³, R¹⁴, R¹⁵, R¹⁶, R¹⁷, R¹⁸, R¹⁹ et R²⁰ qui sont adjacents pouvant être reliés l'un à l'autre de manière à former un cycle.

De tels complexes catalytiques ont été décrits par exemple dans la demande de brevet WO 98/27124.

Dans cette deuxième forme d'exécution, le métal de transition est de préférence choisi parmi les métaux de transition des groupes 8 à 10. Les métaux de transition particulièrement préférés sont le fer et le cobalt.

De bons résultats sont obtenus avec des complexes catalytiques (a) répondant à la formule (V) dans laquelle
- M² est un atome de Fe,
- X² est un atome de Cl,
- R⁴, R⁵ et R⁶ sont des atomes d'hydrogène,
- R⁷ et R⁸ sont chacun, de manière indépendante, un atome d'hydrogène ou un groupe alkyle comprenant de 1 à 6 atomes de carbone,
- R⁹ est un groupe aryle de formule 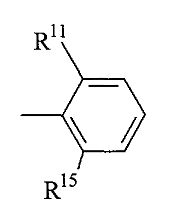 et R¹⁰ est un groupe aryle de formule 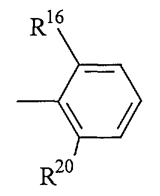
dans lesquelles R¹¹ et R¹⁶ représentent un groupe alkyle comprenant au plus 4 atomes de carbone, et R¹⁵ et R²⁰ représentent un atome d'hydrogène ou un groupement alkyle comprenant au plus 4 atomes de carbone.

Il va de soi que dans le procédé selon l'invention plusieurs complexes catalytiques tels que décrits ci-avant peuvent être mis en oeuvre ensemble.

Le système catalytique contient également au moins un trialkylaluminium (b). Le trialkylaluminium est généralement choisi parmi les composés répondant à la formule AlR₃ dans laquelle R est un groupe alkyle contenant de 1 à 12 atomes de carbone, et leurs mélanges. Les trialkylaluminiums sont de préférence choisis parmi ceux dans lesquels R est un groupe alkyle contenant de 1 à 4 atomes de carbone, tels que le triméthylaluminium (TMA), le triéthylaluminium et le tri-isobutylaluminium (TIBAL), et leurs mélanges. Le TMA est particulièrement préféré.

La quantité de trialkylaluminium (b) mise en oeuvre dans le procédé selon l'invention est en général telle que le rapport atomique entre l'aluminium provenant de l'alkylaluminium (b) et le métal de transition provenant du complexe catalytique (a) est de 10 à 20000. De préférence, ce rapport est d'au moins 50, plus particulièrement d'au moins 100. On obtient de bons résultats lorsque ce rapport est d'au moins 500. Le plus souvent, la quantité de trialkylaluminium mise en oeuvre est telle que le rapport atomique entre l'aluminium et le métal de transition est d'au plus 10000. Des rapports d'environ 1000 à 6000 donnent des résultats particulièrement bons.

Le système catalytique contient au moins une boroxine (c) de formule (I).

Les boroxines sont habituellement choisies parmi celles répondant à la formule (I) dans laquelle A¹ à A³ représentent chacun, de manière indépendante,
- un groupe alkyle comprenant de 1 à 10 atomes de carbone éventuellement substitué par un halogène, un groupe aryle comprenant de 6 à 15 atomes de carbone ou un groupe alkoxy comprenant de 1 à 10 atomes de carbone,
- un groupe cycloalkyle comprenant de 4 à 7 atomes de carbone éventuellement substitué par un halogène, un groupe alkyle comprenant de 1 à 10 atomes de carbone ou un groupe alkoxy comprenant de 1 à 10 atomes de carbone,
- un groupe alkoxy comprenant de 1 à 10 atomes de carbone éventuellement substitué par un halogène, un groupe aryle comprenant de 6 à 15 atomes de carbone ou un groupe alkyle comprenant de 1 à 10 atomes de carbone, ou
- un groupe aryle comprenant de 6 à 15 atomes de carbone éventuellement substitué par un halogène, un groupe alkyle comprenant de 1 à 10 atomes de carbone ou un groupe alkoxy comprenant de 1 à 10 atomes de carbone.

Les boroxines sont préférentiellement choisies parmi celles répondant à la formule (I) dans laquelle A¹, A² et A³ représentent chacun, de manière indépendante, un groupe alkyle ou alkoxy comprenant de 1 à 4 atomes de carbone ou un groupe aryle comprenant de 6 à 10 atomes de carbone, et leurs mélanges. Les boroxines répondant à la formule générale (I) dans laquelle A¹, A² et A³ sont identiques et représentent un groupe alkyle ou un groupe alkoxy comprenant de 1 à 4 atomes de carbone, et leurs mélanges sont particulièrement préférés. De bons résultats sont obtenus avec la triméthylboroxine (TMB), la triméthoxyboroxine (TMOB) et leurs mélanges.

La quantité de boroxine (c) mise en oeuvre dans le procédé selon l'invention est telle que le rapport atomique du bore provenant de la boroxine (c) à l'aluminium provenant du trialkylaluminium (b) est avantageusement inférieur à 0,6. Le rapport atomique du bore provenant de la boroxine (c) à l'aluminium provenant du trialkylaluminium (b) est de préférence d'au moins 0,05, plus particulièrement d'au moins 0,1. On obtient de bons résultats lorsque ce rapport est d'au moins 0,14. Le rapport atomique du bore provenant de la boroxine (c) à l'aluminium provenant du trialkylaluminium (b) est de préférence d'au plus 0,4, plus particulièrement d'au plus 0,25.

Dans le procédé selon l'invention, le système catalytique peut être préparé avant de le mettre en contact avec l'alpha-oléfine. De façon avantageuse, le système catalytique est préparé en prémélangeant d'abord le trialkylaluminium (b) avec la boroxine (c), puis en y ajoutant le complexe catalytique (a). Les durées de précontact entre le trialkylaluminium (b) et la boroxine (c) peuvent varier de quelques secondes à plusieurs jours; elles sont en général comprises entre 1 minute et 10000 heures. Au cas où le trialkylaluminium est le TMA, la durée de précontact est de préférence inférieure à 50 heures. Au cas où le trialkylaluminium est le TIBAL, la durée de précontact est de préférence supérieure à 24 heures. Selon une variante du procédé selon l'invention, le trialkylaluminium (b) est d'abord mélangé avec la boroxine (c), ensuite ce prémélange est mis en contact avec l'alpha-oléfine et puis le complexe catalytique (a) est ajouté. Selon une autre variante du procédé, seulement une partie du trialkylaluminium (b) peut être utilisée pour effectuer le prémélange avec la boroxine (c); l'autre partie de l'alkylaluminium (b) peut être introduite directement dans le réacteur de polymérisation, optionnellement en présence d'alpha-oléfine.

Le procédé de polymérisation selon l'invention peut être réalisé en continu ou en discontinu, selon n'importe quel procédé connu, notamment en solution ou en suspension dans un diluant hydrocarboné, en suspension dans le monomère, ou un des monomères, maintenu à l'état liquide ou encore en phase gazeuse.

La température à laquelle est effectué le procédé de polymérisation selon l'invention est généralement de -20 °C à + 150 °C, le plus souvent de 0 à 130 °C. La température de polymérisation est de préférence d'au moins 30°C. De manière préférée, elle ne dépasse pas 115 °C.

La pression totale à laquelle est effectué le procédé selon l'invention est en général choisie entre la pression atmosphérique et 100 10⁵ Pa, plus particulièrement entre 1 10⁵ et 55 10⁵ Pa.

Le procédé de polymérisation selon l'invention est avantageusement appliqué à la fabrication de polymères de l'éthylène et du propylène, et plus particulièrement, à la fabrication d'homo- et de copolymères de l'éthylène comprenant au moins 90 moles % d'unités dérivées de l'éthylène. Les copolymères préférés sont ceux de l'éthylène et d'une autre alpha-oléfine comprenant de 3 à 8 atomes de carbone. Particulièrement préférés sont les copolymères de l'éthylène et du 1-butène et/ou du 1-hexène. Dans ce cas, le procédé de polymérisation est de préférence réalisé en suspension dans un diluant hydrocarboné. Le diluant hydrocarboné est généralement choisi parmi les hydrocarbures aliphatiques contenant de 3 à 10 atomes de carbone. De préférence, le diluant est choisi parmi le propane, l'isobutane, l'hexane ou leurs mélanges.

Le procédé selon l'invention permet d'éviter l'utilisation d'aluminoxanes tout en procurant une bonne activité catalytique.

Les exemples suivants servent à illustrer l'invention. Les méthodes de mesure des grandeurs mentionnées dans les exemples, les unités exprimant ces grandeurs et la signification des symboles utilisés dans ces exemples sont explicitées ci-dessous.

La masse moléculaire moyenne en poids (M_{w}) est obtenue par chromatographie d'exclusion stérique à partir d'une solution de polymère dans le trichlorobenzène à 0,5 g/l, au moyen d'une colonne polystyrénique telle que la colonne Waters Styragel® HMW 6E commercialisée par Waters Co Ltd.

L'activité catalytique est caractérisée par la quantité de polymère formée lors des essais de polymérisation et est exprimée en kg de polymère par mole de métal de transition mis en oeuvre, par heure de polymérisation et par 10⁵ Pa.

### Exemples 1 à 4

### A. Préparation du prémélange de TMA et de TMB

Du trimethylaluminium a été mis en contact avec de la triméthylboroxine à température ambiante et sous agitation en solution dans le toluène dans les quantités, les rapports atomiques et pendant les durées mentionnés dans le tableau 1.

### B. Polymérisation de l'éthylène

Dans un réacteur de 5 litres muni d'un agitateur, on a introduit sous azote le prémélange TMA/TMB. Ensuite, 1 1 d'isobutane a été ajouté dans le réacteur. La température a été augmentée jusque 50°C. L'éthylène a été introduit pour obtenir une pression partielle en éthylène de 10 10⁵ Pa.

La polymérisation a été démarrée en ajoutant 1,64 µmole du complexe entre le dichlorure de fer et le 2,6-bis-[1-(2,6-diisopropylphenylimino)-éthyl]pyridine, correspondant à la formule VI.

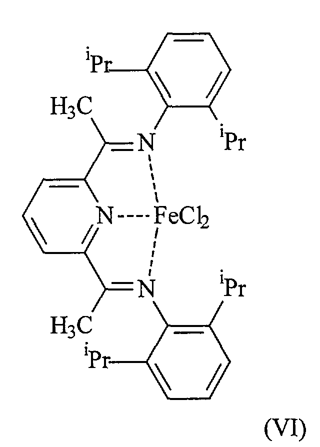

Le rapport atomique Al/Fe était de 4000.

La température et la pression partielle en éthylène ont été maintenues constantes pendant la durée de polymérisation (1 heure). La réaction a été arrêtée par dégazage et refroidissement du réacteur .

Les résultats obtenus se trouvent dans le tableau I.

### Exemple 5R (non conforme à l'invention)

On a répété les opérations de l'exemple 1 mais n'ajoutant pas de boroxine. Les résultats obtenus se trouvent dans le tableau I.

### Exemple 6R (non conforme à l'invention)

On a répété les opérations de l'exemple 1 en remplaçant le mélange de TMA et de TMB par du méthylaluminoxane (MAO). Le rapport atomique Al provenant de l'aluminoxane/Fe provenant du complexe catalytique était de 4000.

Les résultats obtenus se trouvent dans le tableau I.

La comparaison des exemples 2 et 3 avec l'exemple comparatif 6R montre que le procédé selon l'invention permet d'obtenir des activités comparables à celles obtenues en présence d'un aluminoxane comme cocatalyseur.

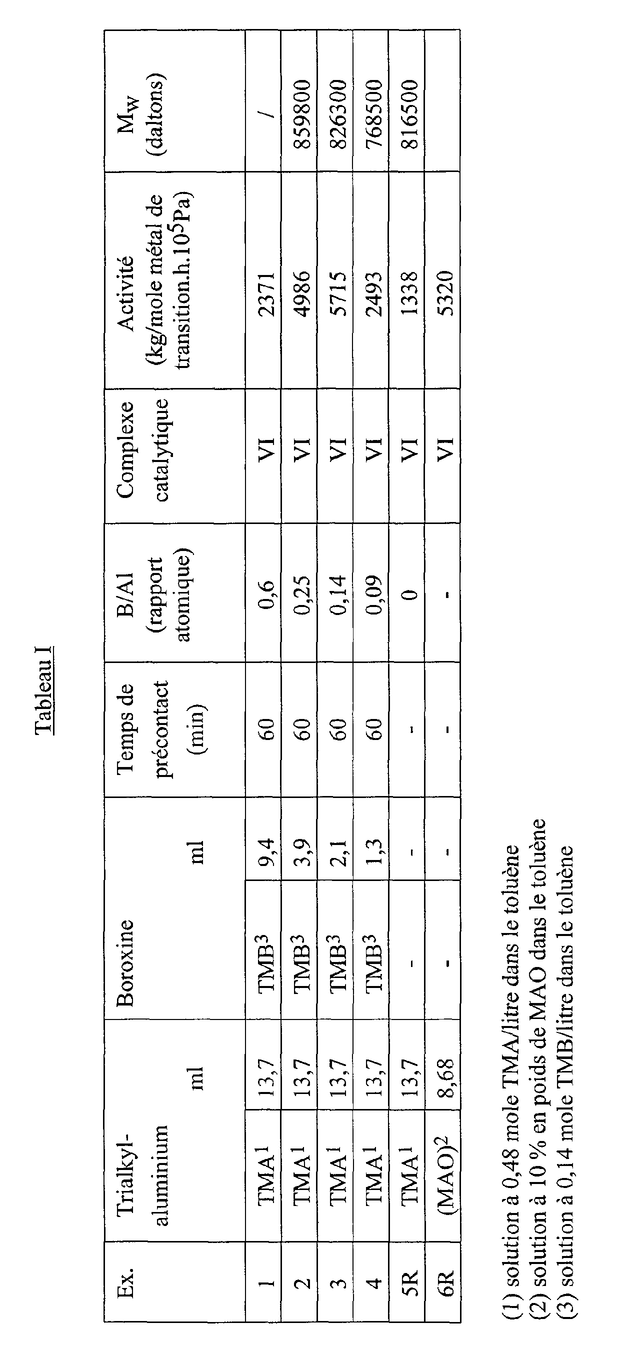

### Exemples 7 à 13

### A. Préparation du prémélange trialkylaluminium/boroxine

1,70 x 10⁻³ moles de boroxine sont dissous dans 10 ml de toluène sec. Dans un réacteur de type Schlenk, on introduit à la canule 1,5 ml d'une solution 2M de trialkylaluminium puis 5 ml de toluène sec. On ajoute ensuite à la canule dans le réacteur de type Schlenk, une quantité de la solution de boroxine afin d'arriver au rapport B/Al indiqué dans le tableau II, puis encore 5 ml de toluène sec. Le mélange réactionnel (boroxine/trialkylaluminium) est agité à température ambiante pendant des périodes de temps variables (voir Tableau II).

### B. Polymérisation de l'éthylène

Dans un réacteur de type Schlenk de 500 ml, préalablement séché sous vide et contenant un agitateur magnétique puis conditionné sous azote, ont été ajoutés 100 ml de toluène. Le réacteur est alors porté à la température de polymérisation (30°C). On y a ajouté ensuite l'éthylène par barbotage, permettant d'éliminer l'azote dissous, jusqu'à obtenir une pression de 10⁵ Pa. La totalité du mélange préparé à l'étape A a été ensuite introduite dans le réacteur. Le mélange réactionnel a ensuite été agité pendant 10 minutes avant de démarrer la polymérisation par l'introduction de 8 x 10⁻⁴ mmole du complexe catalytique spécifié dans le tableau II de façon à atteindre un rapport atomique Al provenant du trialkylaluminium/métal de transition provenant du complexe catalytique de 4000.

La température et la pression dans le réacteur ont été maintenues constantes pendant une heure. Après une heure, l'alimentation en éthylène est arrêtée et 5 ml d'éthanol contenant 10% HCl sont introduits dans le réacteur pour désactiver la polymérisation. L'ensemble est ensuite versé dans 400 ml d'éthanol pour faire précipiter le polymère. Le polymère précipité est ensuite filtré, lavé et séché sous vide jusqu'à l'obtention d'un poids constant.

Les résultats obtenus se trouvent dans le tableau II.

### Exemple 14R (non conforme à l'invention)

Les opérations de l'exemple 13 ont été répétées, sans ajout de boroxine et avec un rapport atomique Al provenant du trialkylaluminium/Ni de 3000. Les résultats obtenus se trouvent dans le tableau II.

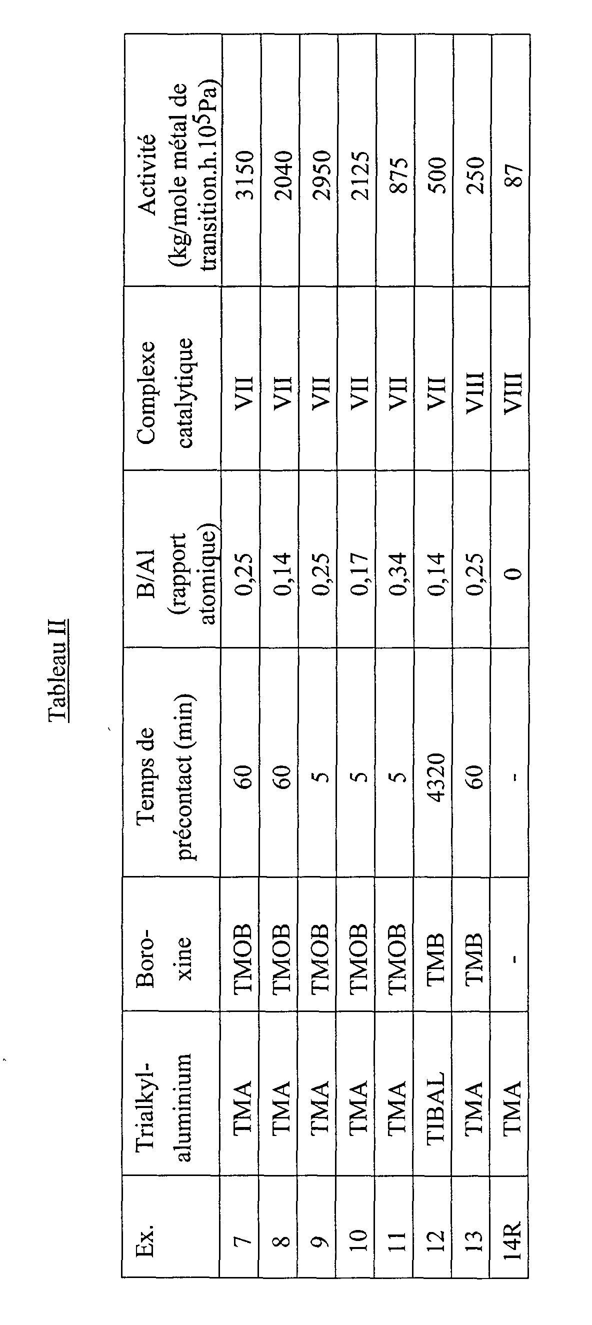

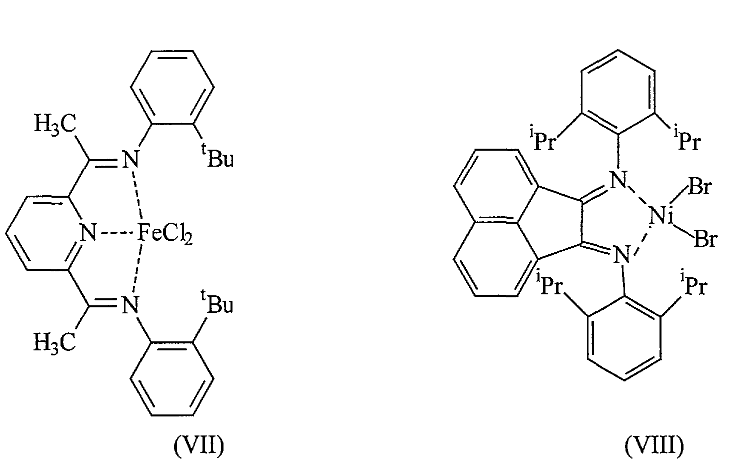

### Exemple 15

Les opérations de l'exemple 13 ont été répétées mais en remplaçant le complexe catalytique de formule VIII par l'éthylènebisindényldichlorure de zirconium. Le rapport atomique Al provenant du triméthylaluminium/Zr était de 4000. L'activité était de 290 kg/mole Zr.h.10⁵Pa.

### Exemple 16

### A. Préparation du prémélange de TMA et de TMB

68,6 ml d'une solution de 10 % de TMA dans l'hexane ont été mis en contact, à température ambiante et sous agitation, avec 0,92 ml de TMB et 68,6 ml d'hexane pendant 60 minutes. Le rapport atomique B/Al était de 0,3.

### B. Polymérisation du propylène

Dans un réacteur en acier de 5 litres, préalablement conditionné, on a introduit sous azote 39 ml du prémélange TMA/TMB préparé à l'étape A. Trois litres de propylène liquide ont été introduits dans le réacteur. Dans le même temps, 1,5 µmole de diméthylsilyl-bis-(2-méthyl-4-naphtyl-indényle)-zirconium dichlorure ont été mis en suspension dans le toluène et 8,9 ml du mélange TMA/TMB ont été introduits. Le mélange a été maintenu à température ambiante pendant 15 minutes avant d'être introduit dans le réacteur de polymérisation. Le réacteur a été chauffé à 70°C en 5 minutes et a été maintenu à cette température durant 1 heure. La polymérisation a été arrêtée par dégazage et refroidissement du réacteur. On a récupéré après vidange du réacteur et séchage du polymère 23,2 g de produit.

Les résultats se trouvent dans tableau III.

### Exemple 17R (non conforme à l'invention)

On a répété les opérations de l'exemple 16 mais sans ajouter de boroxine.

Les résultats se trouvent dans le tableau III.

**Tableau III**

| Ex. | Trialkylaluminium | Boroxine | B/Al | Activité (kg/mole Zr transition.h. 10⁵Pa) |
|---|---|---|---|---|
| 16 | TMA | TMB | 0,3 | 1550 |
| 17R | TMA | - | 0 | 0 |

## Revendications

1. Procédé de polymérisation d'alpha-oléfines selon lequel on met en contact, dans des conditions polymérisantes, au moins une alpha-oléfine avec un système catalytique comprenant
(a) au moins un complexe catalytique à base d'un métal de transition des groupes 4 à 12,
(b) au moins un trialkylaluminium, et
(c) au moins une boroxine représentée par la formule (I) 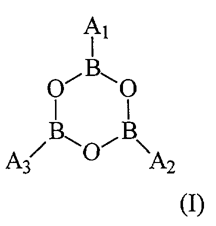
dans laquelle A¹ à A³ représentent chacun, de manière indépendante, un groupe alkyle, cycloalkyle, alkoxy ou aryle, éventuellement substitué, et dans lequel le rapport atomique du bore provenant de la boroxine (c) à l'aluminium provenant du trialkylaluminium (b) est inférieur à 0,9.

2. Procédé selon la revendication 1, **caractérisé en ce que** le complexe catalytique (a) est choisi parmi les complexes répondant à la formule 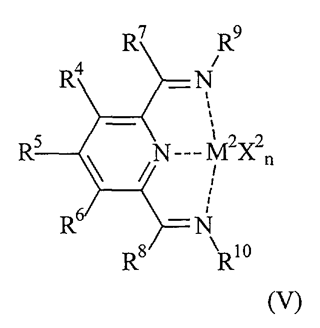 dans laquelle
M² est un métal de transition des groupes 6 à 12,
X² représente un atome d'halogène,
n est 2 ou 3,
R⁴, R⁵, R⁶, R⁷ et R⁸ représentent chacun, de manière indépendante, un atome d'hydrogène, un groupement hydrocarbyl ou un groupement hydrocarbyl substitué,
R⁹ et R¹⁰ représentent chacun, de manière indépendante, un groupement aryle ou un groupement aryle substitué.

3. Procédé selon la revendication 2, **caractérisé en ce que** le complexe catalytique (a) répond à la formule (V) dans laquelle
R⁹ est un groupement aryle de formule générale 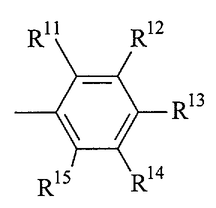
et R¹⁰ est un groupement aryle de formule générale 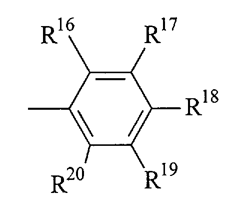 dans lesquelles
R¹¹ et R¹⁶ représentent chacun, de manière indépendante, un groupe hydrocarbyl ou un groupe hydrocarbyl substitué,
R¹², R¹³, R¹⁴, R¹⁵ ,R¹⁷, R¹⁸, R¹⁹ et R²⁰ représentent chacun, de manière indépendante, un atome d'hydrogène, un groupe hydrocarbyl ou un groupe hydrocarbyl substitué,
les groupes R¹¹, R¹², R¹³, R¹⁴, R¹⁵, R¹⁶, R¹⁷, R¹⁸, R¹⁹ et R²⁰ qui sont adjacents peuvent être reliés l'un à l'autre de manière à former un cycle.

4. Procédé selon l'une quelconque des revendications 2 à 3, **caractérisé en ce que** le complexe catalytique (a) est choisi parmi ceux comprenant un métal de transition des groupes 8 à 10 du Tableau Périodique.

5. Procédé selon la revendication 4, **caractérisé en ce que** le métal de transition est le fer ou le cobalt.

6. Procédé selon la revendication 1, **caractérisé en ce que** le complexe catalytique (a) est choisi parmi les métallocènes comprenant au moins un métal de transition des groupes 4 ou 5.

7. Procédé selon l'une quelconque des revendications 1 à 6, **caractérisé en ce que** le trialkylaluminium (b) est choisi parmi les composés correspondant à la formule AlR₃ dans laquelle R est un groupe alkyle contenant de 1 à 4 atomes de carbone, et leurs mélanges.

8. Procédé selon l'une quelconque des revendications 1 à 7, **caractérisé en ce que** la boroxine (c) est choisie parmi la triméthylboroxine, la triméthoxyboroxine, et leurs mélanges.

9. Procédé selon l'une quelconque des revendications 1 à 8, **caractérisé en ce que** le rapport atomique du bore de la boroxine (c) à l'aluminium provenant du trialkylaluminium (b) est inférieur à 0,6.

10. Procédé selon l'une quelconque des revendications 1 à 9, appliqué à la fabrication d'homo- ou de copolymères de l'éthylène comprenant au moins 90 moles % d'unités dérivées de l'éthylène.
